# EUROPEAN PATENT APPLICATION

(11) **EP 4 497 711 A1**
(43) Date of publication of application: **29.01.2025**
(21) Application number: 23182686.8
(22) Date of filing: 30.06.2023
(51) Int. Cl.: B65G 17/20

(54) **FESTOON SYSTEM FOR MOUNTING CABLES**

(71) Applicant: Sandvik Mining and Construction G.m.b.H., 8740 Zeltweg (AT)
(72) Inventor: Rieger, Mr. Hubert, 8740 Möbersdorf-Siedlung (AT)
(74) Representative: Sandvik

(57) **Abstract**

The invention concerns a festoon system for mounting cables (5) on a rail (26) in a festoon-fashion, comprising:
a series of festoon sections (1), wherein each one of the series of festoon sections (1) comprises:
a front trolley (2) for driving along the rail (26), adapted to be moveably mounted on the rail (26),
a number of cable trolleys (3) adapted to be moveably mounted on the rail (26), wherein each of the number of cable trolleys (3) comprises a saddle (4) for supporting a cable (5),
a tension element (6) which connects the front trolley (2) and the number of cable trolleys (3) of the respective one of the series of festoon sections (1).

## Description

The invention concerns a festoon system for mounting cables on a rail in a festoon-fashion.

It is known in the prior art to support cables in a festoon-style on a monorail. In this way, e.g. the permanent power supply to a continuous haulage system can be managed in underground mining conditions. The festoon-style storage allows to adjust the distance between an origin where the festoon is fixed and an end of the festoon, i.e. in this example the distance to which power is supplied.

Trolley systems that include multiple trolleys that travel along a beam have been used previously. An application of trolley systems involves facilitating the carrying and organization of cables suspended between trolleys. Such cables may be electrical cables or hydraulic hoses which are used to provide power and control to a moving machine that is distanced from a (power) source. Through the use of a festoon-style trolley system, such cables can be suspended in loops (or festoons) between adjacent trolleys riding along an elevated rail. By use of such a system, multiple cables can be kept in an orderly fashion and suspended.

For example, US 5,524,548 shows a trolley system that includes a powered tow trolley that travels along a rail, an end trolley that is fixed to an end of the rail, and several intermediate trolleys that travel along the rail between the tow and end trolley. All trolleys are interconnected with a flexible tow line. The trolleys include saddles for supporting a load of cables or hoses festooned between the trolleys that are used for powering a moving machine connected to the tow trolley.

Further, CN 217024796 U shows a cable self-moving device, which comprises a monorail hanging beam and a plurality of cable pulleys arranged on the monorail hanging beam. The cable pulleys slide on the monorail hanging beam. The cable pulley is provided with a locking mechanism which can be locked on the monorail hanging beam so as not to slide continuously. The cable pulley comprises a self-driving mechanism for driving along the beam.

Disadvantageously, in the festoon systems known in the prior art, the length of the festoon system in its retracted state determines its maximum length in the extended state. Thus, for achieving long maximum supply distances, already a lot of length is required for storing the festoon system on the monorail in its retracted state. It is only possible to store these festoons along their whole (retracted) lengths. Thus, present festoon systems are not flexible in length. Mines may have multiple branches/forks. Thus, it may not be possible to reach all areas of the mine with the present systems, because the festoon may be too long in its retracted state for a close by branch, but may be too short in its extended state for a distant branch. Moving present festoon systems can be cumbersome, since the whole system needs to be moved at the same time. Further, present festoon systems are also limited in their ability to run around corners.

It is an objective of the present invention to prevent or alleviate at least one of the disadvantages of the prior art. In particular, it is an objective of the present invention to propose a festoon system that allows more flexibility and/or is easier to move to a different supply location.

This is achieved by a festoon system for supporting or mounting cables on a rail in a festoon-fashion, comprising:
a series of festoon sections, wherein each one of the series of festoon sections comprises:
a front trolley for driving along the rail, adapted to be moveably mounted on the rail,
a number of cable trolleys adapted to be moveably mounted on the rail, wherein each of the number of cable trolleys comprises a saddle for supporting a cable,
a tension element which connects the front trolley and the number of cable trolleys of the respective one of the series of festoon sections, for example, in a sequence.

Thus, the festoon system is modular. The festoon sections can be moved individually, since each festoon section comprises a front trolley for driving along the rail. Each individual festoon section can be shunt as a smaller unit in the mine to the next location where it is required. The number of festoon sections can be adapted to the length required and festoon sections not required at a certain time can be sidelined. The expression "a series of festoon sections" is understood as comprising at least two festoon sections arranged in a sequence.

Preferably a front trolley comprises a saddle for supporting a cable.

The festoon sections of the series of festoon sections are optionally arranged in a row. Optionally, a first (front) one of the series of festoon sections is followed by a second one of the series of festoon sections, which is optionally followed by at least another one of the series of festoon sections, including a last (rear) one of the series of festoon sections. Optionally, the festoon sections are detachably connectable with each other. In particular, each festoon section is detachably connectable (in particular detachably connected) to its adjacent festoon section(s). Optionally, a rear one of the series of festoon sections comprises a fixed rear trolley or an end clamp, which acts as an anchor (but which may also act as a drive for relocation).

Optionally, each front trolley and/or each one of the number of cable trolleys and/or each connector arrangement comprises wheels (in particular at least a pair of wheels) (e.g. for straddling a web of the rail and/or rolling on a flange of the rail) and/or at least a pair of guide rollers (e.g. for assisting in maintaining the position of the respective trolley along the rail by rolling on the web of the rail and/or straddling the web of the rail). Each saddle is arranged for supporting at least one cable. Optionally, the rail has an I-shape profile, i.e. comprises two flanges connected by a web. Each festoon section comprises optionally at least 2, further optionally at least 5, further optionally at least 10, further optionally at least 20, cable trolleys. The festoon system comprises optionally at least 2, further optionally at least 4, further optionally at least 8, festoon sections.

The tension element acts to pull succeeding ones of the number of cable trolleys, in particular to relay a pull by preceding ones of the front trolley and the number of cable trolleys of each festoon section to at least some of the number of cable trolleys of the respective festoon section. Thus, the tension element is configured for preventing tensile force on the cable. The front trolley is optionally configured for moving the whole respective festoon section. Optionally, the front trolley is configured for driving in both directions along the rail. First, the front trolley may pull on the tension element connecting it to an adjacent cable trolley. Said cable trolley will react to the pulling force by traveling toward the front trolley. Consequently, said cable trolley will pull the next adjacent cable trolley forward as well. The reaction will continue until the last cable trolley of the respective festoon section.

Optionally, the festoon system comprises a connector arrangement adapted to be moveably mounted on the rail and adapted to be arranged between two adjacent ones of the series of festoon sections, wherein the connector arrangement comprises a front coupling element and a rear coupling element for detachable coupling with the two adjacent ones of the series of festoon sections, in particular for coupling with a rear trolley coupling element of a rear one of the number of cable trolleys of a preceding one of the series of festoon sections and with a front trolley coupling element of a front trolley of a subsequent one of the series of festoon sections,
wherein optionally, at an end of the festoon sections there is provided an end connector arrangement, which comprises a front coupling element or a rear coupling element for detachable coupling with an end festoon section. Optionally, a connector arrangement is provided for between each two adjacent ones of the series of festoon sections.

In another preferred embodiment, a front one of the series of festoon sections, in particular a rear one of the number of cable trolley of the front one of the series of festoon section, comprises a rear coupling element;
a rear one of the series of festoon section comprises a connector arrangement adapted to be moveably mounted on the rail and comprising a front coupling element;
each intermediate one of the series of festoon sections (i.e. between/excluding the front one and the rear one) comprises a connector arrangement adapted to be moveably mounted on the rail and comprising a front coupling element and wherein each intermediate one of the series of festoon sections, in particular a rear one of the number of cable trolleys of each intermediate one of the series of festoon sections, comprises a rear coupling element;
wherein the rear coupling elements are configured for detachable coupling with the front coupling elements. Optionally, the rear coupling elements are female coupling elements and the front coupling elements are male coupling elements compatible with the rear coupling elements, or vice versa. In this way, adjacent ones of the series of festoon sections can be coupled together and e.g. be moved together. Optionally, adjacent ones of the festoon sections are connected by their respective front and rear coupling element. Optionally, each rear coupling element (or each front coupling element) comprises a trigger for releasing the connection to the respective front coupling element (or rear coupling element). Optionally, the front coupling elements and the rear coupling elements comprise aligning elements for aligning the respective front coupling element with the respective rear coupling element, wherein in particular the rear coupling element comprises a tapered tip and the front coupling element comprises an inverted tapered socket.

Optionally, each connector arrangement comprises a first cable connector for connection with the cable supported by the cable trolleys of a preceding one of the series of festoon sections and a second cable connector for connection with a cable supported by a subsequent one of the series of festoon sections. Optionally, there is a connection between first cable connector and the second cable connector, wherein the connection corresponds to the type of the respective cable. E.g., for electrical cables, there may be an electrical connection between the first cable connector and the rear cable connector. This allows to easily achieve a connection between the cables of adjacent ones of the series of festoon sections.

Optionally, each connector arrangement comprises a connection module and a supporting bar for holding the connection module at a lowered height with respect to the rail, wherein the connection module comprises the first cable connector and the second cable connector. This allows operating personnel to easily connect the cables of adjacent festoon sections (via the connector arrangement), since the connection can be made at a lower height than the rail. Optionally, the supporting bar extends substantially parallel to a web of the rail. Optionally, the supporting bar extends (substantially vertically) downwards in a state in which the respective connector arrangement is mounted on the rail as intended.

Optionally, the connector arrangement is integrated with the front trolley of the subsequent one of the series of festoon sections. Consequently, the front trolley of one of the series of festoon sections can be particularly well connected to the rear trolley of an adjacent one of the series of festoon sections. Optionally, the connector arrangement is rigidly connected with the front trolley. Thus, the connector arrangement is driven along the rail together with the front trolley.

Optionally, the front trolley of each one of the series of festoon sections comprises a drive element for driving the front trolley along the rail, wherein the drive element in particular comprises a friction wheel drive element. Optionally, the driving elements of the front trolleys are configured for driving in both directions along the rail.

Optionally, at least one of the number of cable trolleys of each one of the series of festoon sections comprises a drive element for driving the respective one of the at least one of the number of cable trolleys along the rail. For example, the rear one and/or middle one of the number of cable trolleys of each one of the series of festoon sections comprises a drive element. Thus, tension on the tension element over the whole festoon section can be reduced and the driving force can be increased, improving e.g. the ability to drive along corners of the rail. Optionally, the driving elements of the cable trolleys are configured for driving in both directions along the rail. Optionally at least every 50^{th}, further optionally at least every 25^{th}, cable trolley of each festoon section comprises a drive element. There are optionally at least 2, further optionally at least 5, further optionally at least 10 undriven trolleys between two driven trolleys (i.e. front trolley or cable trolley comprising a drive element) of a respective festoon section.

Optionally, each connector arrangement may also comprise a drive element (which may not be necessary, if the connector arrangement is integrated with the front trolley).

Optionally, each one of the series of festoon sections comprises a control unit which is configured for controlling the drive element of the front trolley of the respective one of the series of festoon sections and/or the drive element of the at least one of the number of cable trolleys of the respective one of the series of festoon sections and/or the drive element of the connector arrangement of the respective one of the series of festoon sections. Alternatively, the whole festoon system may comprise a single control unit which is configured for controlling the drive element of the front trolley of the whole series of festoon sections and/or the drive element of the at least one of the number of cable trolleys of the whole series of festoon sections and/or the drive element of the connector arrangement of the respective one of the series of festoon sections. In particular, the front one of the festoon sections follows a target (by being driven by at least the front trolley) and gets extended. In case the front one of the series of festoon sections is completely extended or reaches a certain level of extension, the next (adjacent) one of the series of festoon sections follows until the whole festoon system is extended (in case the full length should be required). Further, in case the drive element(s) of preceding one of the festoon sections may experience a too high pulling force, the drive element(s) of the subsequent festoon section is/are activated to support the drive element(s) of the preceding festoon section. This improved the ability to go around corners.

Optionally, the saddle of the front trolley of each one of the series of festoon sections and/or the saddle of at least one of the number of cable trolleys of each one of the series of festoon sections comprises a guide channel for guiding the cable, wherein the guide channel extends in an (non-zero) angle relative to a moving direction in which the respective cable trolleys moves along the rail (top view, i.e. seen from above). Thus, the loops of cables supported by adjacent cable trolley can be overlapping, allowing to store the same cable length on a shorter retracted length of the festoon section, since the cable trolleys can move closer together. The angle is optionally between 0,5° and 30°, further optionally between 1° and 15°, further optionally between 4° and 10°.

Optionally, the tension element of each one of the series of festoon sections comprises tension units, in particular tension ropes and/or tension chains and/or tension strings and/or tension straps, connecting adjacent ones of the front trolley and the number of cable trolleys of the respective one of the series of festoon sections. I.e. for each one of the series of festoon sections, one of the tension units connects the front trolley with a first one of the cable trolleys, another tension unit connects the first one of the cable trolleys with a second one of the cable trolleys, yet another tension unit connects the second one of the cable trolleys with a third one of the cable trolleys, and so on up to a last one of the cable trolleys. The tension units are in particular loose in a retracted state of the respective festoon section and are tensioned in an extended state of the respective festoon section. Optionally, the front trolley comprises a shackle, a last one of the cable trolleys comprises a shackle and each other one of the cable trolleys comprises two shackles for coupling the respective tension unit.

Optionally, the front trolley of each one of the series of festoon sections comprises a load pin for determining a force on the front trolley exerted by the tension element, in particular the respective tension unit. Optionally, at least one of the cable trolleys of each of the series of festoon sections comprises a load pin for determining a force on the respective cable trolley exerted by the tension element, in particular the respective tension unit. In particular at least one of the cable trolleys that comprises a drive element also comprises such a load pin.

Thus, upon detection that the force exerted on a particular trolley (i.e. front trolley or cable trolley) exceeds a predefined threshold value, the drive element of said particular trolley may be activated and the trolley will follow in the direction of the preceding trolleys, pulling the succeeding trolleys. Optionally, each one of the series of festoon sections comprises sensors integrated to monitor speed, power of the drive element of the front/cable trolleys.

Optionally, the front trolley and the number of cable trolleys of each one of the series of festoon sections comprise distance holders (e.g. bumpers) which are configured for keeping adjacent ones of the front trolley and the number of cable trolleys of the respective one of the series of festoon sections apart by a predefined minimum distance. In particular, the distance holders of adjacent trolleys touch when in the retracted state of the respective festoon section.

Optionally, the front trolley of each one of the series of festoon sections comprises a device for determining a distance travelled by the respective front trolley.

Optionally, the front trolley of each one of the series of festoon sections comprises a device for measuring degrees of rotation, in particular a resolver, for determining a distance travelled by the respective front trolley along the rail, wherein a wheel of the device for measuring degrees of rotation is arranged such that the wheel contacts the rail when the respective front trolley is mounted on the rail (and in particular the rotation of said wheel is measured). Thus, the front trolley can determine a distance travelled along the rail. This can be used, e.g. for moving the front trolleys of a number of festoon sections simultaneously over the same distance.

Optionally, the front trolley of each one of the series of festoon sections comprises at least one sensor for detecting protrusions of the rail as the respective front trolley (2) travels along the rail, preferably two proximity sensors arranged displaced from each other in a direction parallel to the rail and directed at the rail for detecting protrusions of the rail as the respective front trolley travels along the rail. Junctions between sections of the rail may comprise protrusions. These protrusions can be detected by the proximity sensor, indicating that the respective front trolley reached the end of a section of the rail (or the junction between the sections). Since the length of the sections of the rails is known, this can be used to determine a distance travelled by the front trolley. In particular, this can be used for calibrating the distance as determined by the device for measuring degrees of rotation. By using two proximity sensors it is further possible to determine the direction of the movement (i.e. forward or backwards).

Optionally, the control unit of each one of the series of festoon sections is configured for controlling the drive element of the front trolley of the respective one of the series of festoon sections and/or the drive element of the at least one of the number of cable trolleys of the respective one of the series of festoon sections based upon readings from device for determining a distance travelled by the respective front trolley, in particular based upon readings from the device for measuring degrees of rotation of the respective one of the series of festoon sections and/or the two proximity sensors of the respective one of the series of festoon sections.

Optionally each one of the series of festoon sections comprises the cable, wherein the cable is supported by the front trolley and each of the number of cable trolleys of the respective one of the series of festoon sections. Optionally, each cable is connected to the second cable connector of the respective festoon section and to the first cable connector of a succeeding festoon section.

Optionally, the festoon section comprises the rail, wherein the front trolley and each of the number of cable trolleys of each one of the series of festoon sections are mounted on the rail.

The invention further concerns a method for moving a festoon system (according to any of the embodiments mentioned in this disclosure) mounted on a rail, comprising the steps:
detaching the rear coupling element of one of the series of festoon sections from the front coupling element of a succeeding one of the series of festoon sections;
disconnecting the cable of the one of the series of festoon sections from the first cable connector of the succeeding one of the series of festoon sections;
moving the one of the series of festoon sections along the rail (and optionally moving further preceding festoon sections along the rail, which may also comprise detaching and individually moving said further preceding festoon sections);
moving (at least) the succeeding of the series of festoon sections along the rail (and optionally moving further succeeding festoon sections along the rail, which may also comprise detaching and individually moving said further succeeding festoon sections);
detachably coupling the rear coupling element of the one of the series of festoon sections to the front coupling element of the succeeding one of the series of festoon sections;
connecting the cable of the one of the series of festoon sections to the first cable connector of the succeeding one of the series of festoon sections.

By way of example, the invention is further explained with respect to some selected embodiments shown in the drawings. However, these embodiments shall not be considered limiting for the invention.
Fig. 1a schematically shows an exemplary embodiment of a festoon section of a festoon system for mounting cables on a rail in a festoon-fashion in a partially extended state in a side view; Figs. 1b to 1d schematically show the same embodiment of the festoon section in more detail.
Fig. 2a schematically shows the embodiment of the festoon section of Fig. 1 in the partially extended state in an oblique view; Fig. 2b shows a front of the same festoon section in more detail; Fig. 2c shows detail A of Fig. 2b.
Fig. 3a schematically shows the embodiment of the festoon section of Fig. 1 in a completely retracted state in a side view; Fig. 3b shows detail A of Fig. 3a.
Fig. 3c schematically shows the embodiment of the festoon section of Fig. 1 in a completely retracted state in an oblique view; Fig. 3d shows a front of the festoon section in more detail in an oblique view.
Fig. 4a schematically shows an example of a festoon system on a curved rail; Fig. 4b shows a front of the festoon section in more detail.
Fig. 5 schematically shows a connector arrangement and a front trolley of the embodiment of the festoon section of Figs. 1 to 4 in more detail.
Fig. 6a schematically illustrates the connection between two adjacent festoon sections in a connected state.
Fig. 6b is a detailed view of Fig. 6a.
Fig. 7a schematically illustrates the connection between two adjacent festoon sections in a disconnected state.
Fig. 7b is a detailed view of Fig. 7a.
Fig. 8 schematically shows a cable trolley of the embodiment of Fig. 1 in an oblique view.
Fig. 9 schematically shows a rear one of the cable trolleys of the embodiment of Fig. 1 in an oblique view.
Fig. 10a schematically shows a drive cable trolley of the embodiment of Fig. 1 in an oblique view from the top; Fig. 10b schematically shows the same drive cable trolley in an oblique view from the bottom.

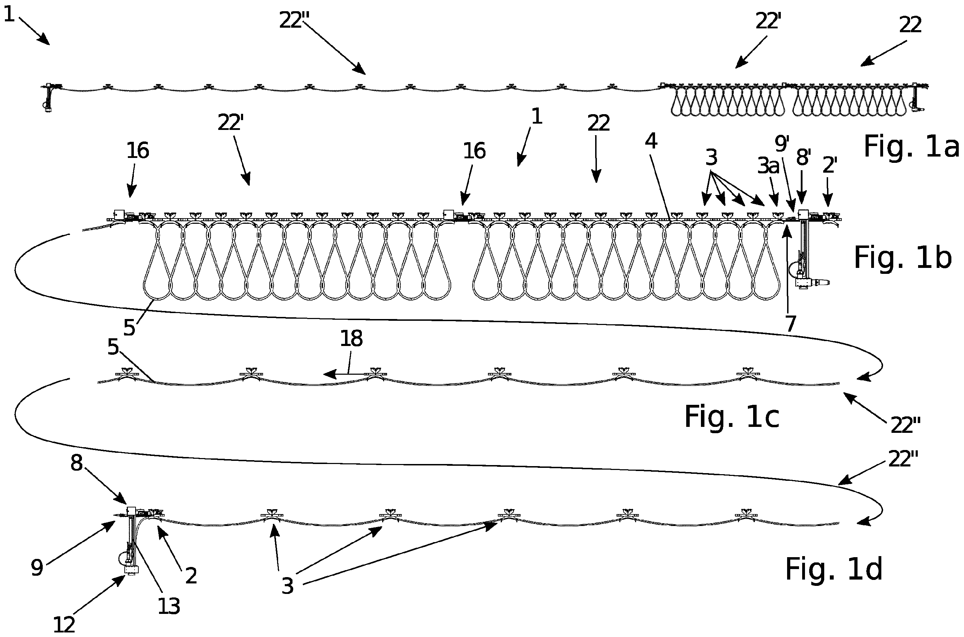

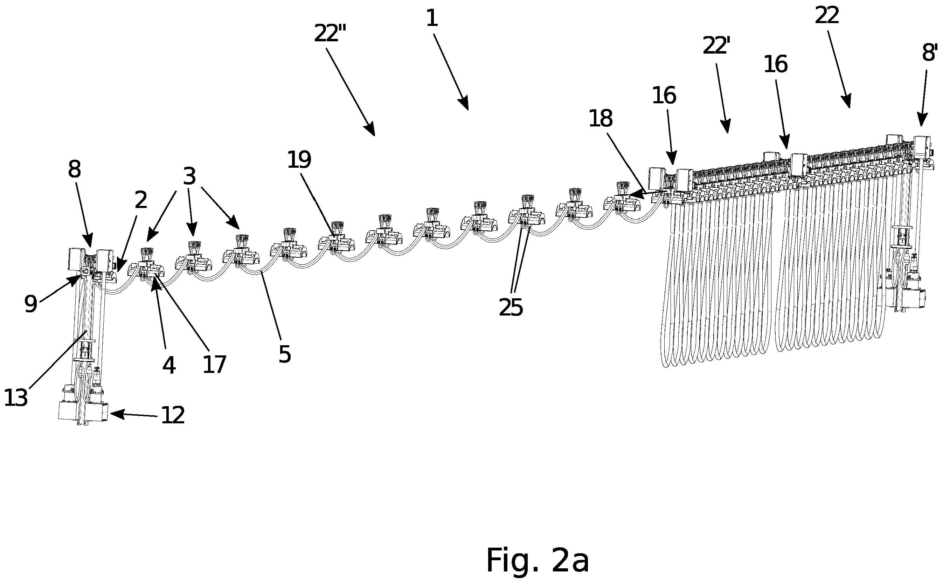

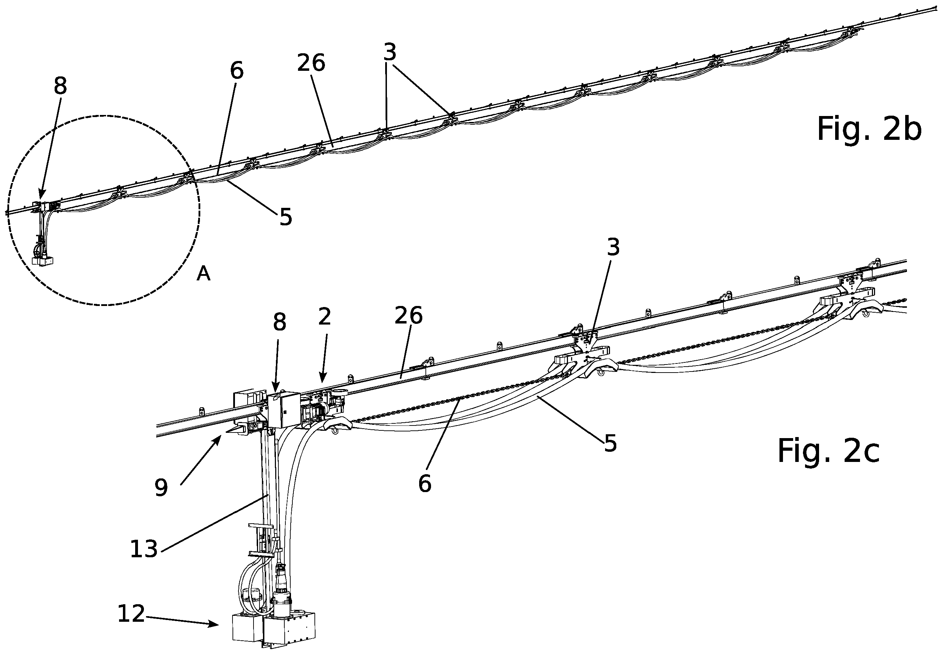

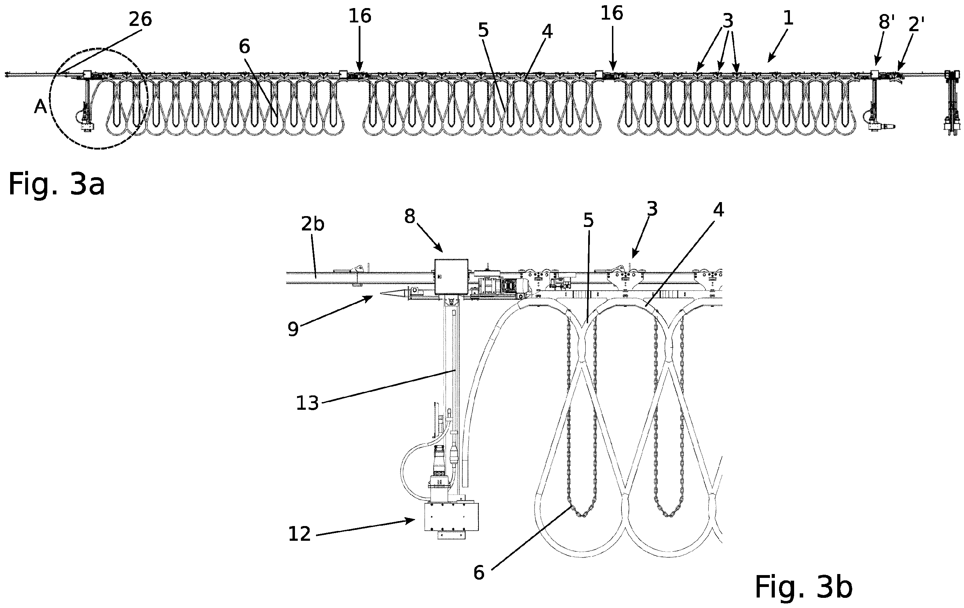

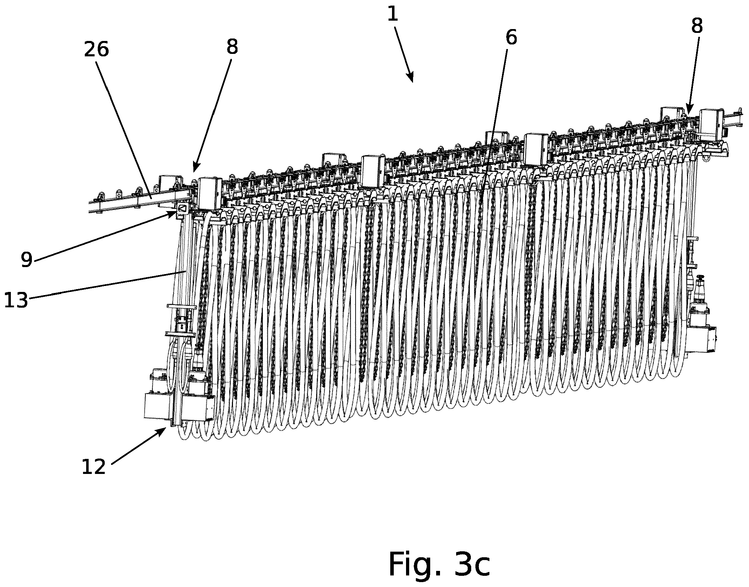

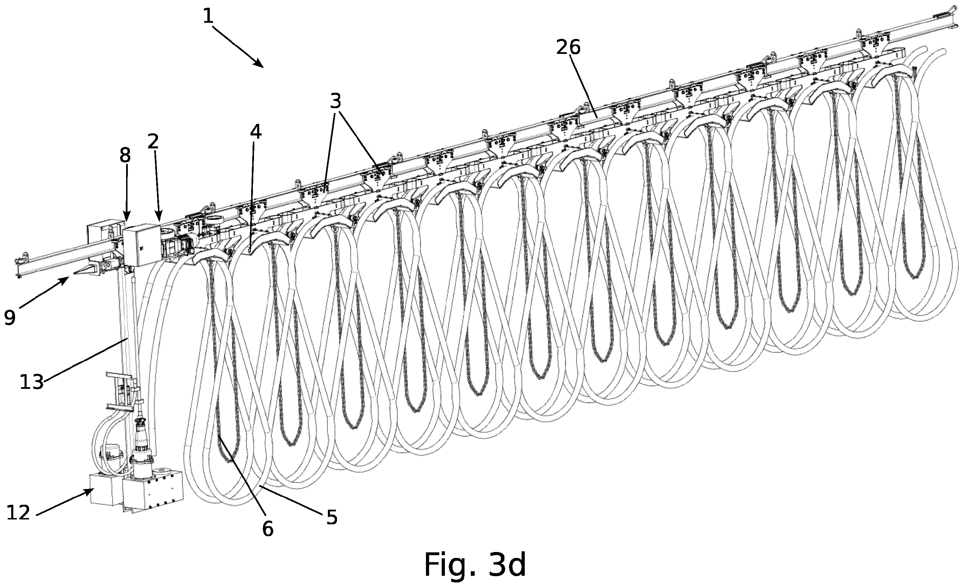

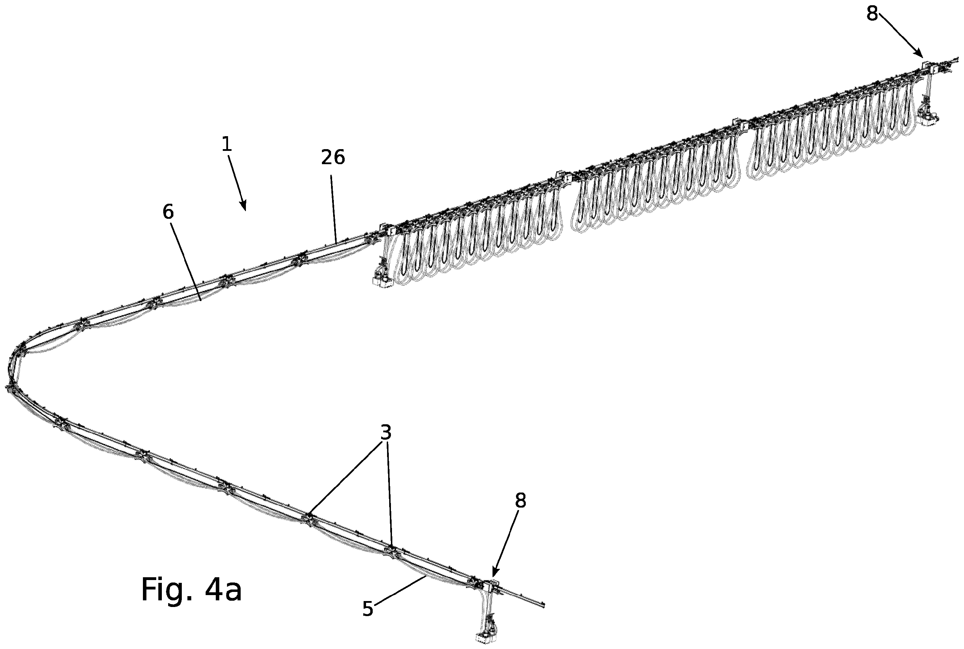

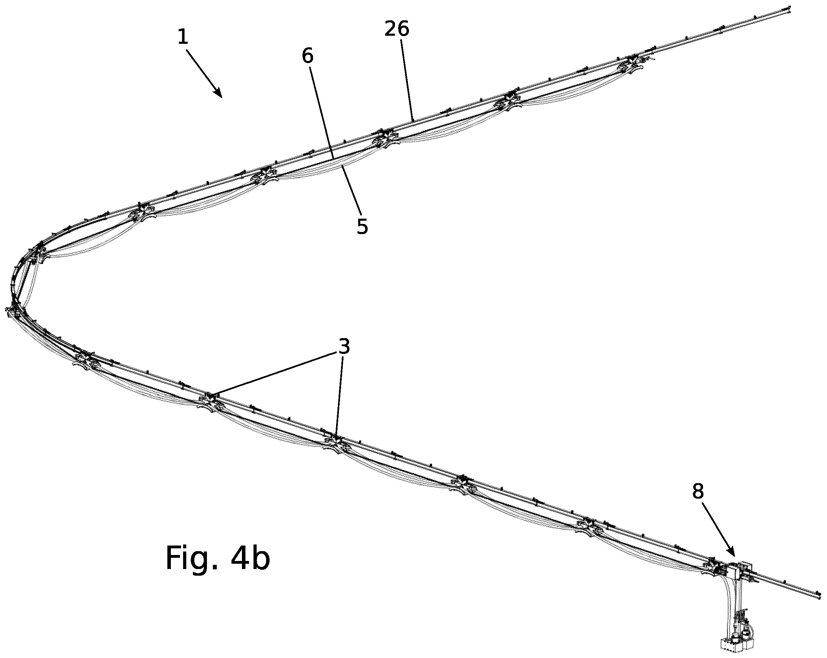

Fig. 1a schematically shows an exemplary embodiment of a festoon section 1 of a festoon system for mounting cables 5 on a rail 26 in a festoon-fashion in a partially extended state in a side view; Figs. 1b to 1d schematically show the same embodiment of the festoon section 1 in more detail. In particular, Figs. 1b to 1d show a detailed view of the same festoon section 1 in three parts, which drawings are to be assembled as indicated by the arrow. Fig. 2a shows the same embodiment in the partially extended state in an oblique view; Fig. 2b shows a front of the same festoon section in more detail; Fig. 2c shows detail A of Fig. 2b. Fig. 3 schematically shows the embodiment of the festoon section 1 of Fig. 1 in a completely retracted state in a side view; Fig. 3b shows detail A of Fig. 3a.Fig. 3c shows the same embodiment in the completely retracted state in an oblique view; Fig. 3d shows a front of the festoon section 1 in more detail in an oblique view. For easier visibility, the rail 26 is not shown in Figs. 1a to 2. Fig. 4a schematically shows an example of a festoon system on a curved rail, wherein one (front) festoon section is in extended state and another festoon system is in retracted state; Fig. 4b shows a front of the festoon section 1 in more detail.

The festoon section 1 comprises a front trolley 2 for driving along the rail 26, adapted to be moveably mounted on the rail 26, and a number of cable trolleys 3 adapted to be moveably mounted on the rail 26, wherein each of the number of cable trolleys 3 and the front trolley 2 comprise a saddle 4 for supporting a cable 5. The festoon section 1 further comprises a tension element 6 (not shown in Figs. 1a to 2) which connects the front trolley 2 and the number of cable trolleys 3 of the festoon sections 1 and acts to prevent a pulling force from being exerted on the cable 5 (see Fig. 2c illustrating the tension element 6 being completely tensioned, while there is still some slack in the cable 5). The number of cable trolleys 3 and the front trolley 2 each comprise (a) shackle(s) 25 for connecting the respective trolley 2, 3 to the tension element.

The front trolley 2 comprises a drive element 14 for driving the front trolley along the rail 26. Further, at least one of the number of cable trolleys 3, in this case two cable trolleys 3, are configured as drive cable trolleys 16, which comprise a drive element 15 for driving along the rail 26. Thus, in this embodiment, the drive cable trolleys 16 divide the festoon section in 3 modules 22, 22', 22'' . The rear module 22 and the intermediate module 22' are in a retracted state in Fig. 1 and 2. I.e., the cable trolleys 3 are close together such that the cable 5 is hanging in loops. In particular, the front trolley 2 and the number of cable trolleys 3 comprise distance holders 19, which are configured for keeping adjacent trolleys 2, 3 apart by a minimum distance. In the rear module 22 and the intermediate module 22', the distance holders 19 of adjacent cable trolleys 3 are in contact with each other. The front module 22'' is in its extended state, wherein the cable trolleys 3 are distanced further apart from each other and the cable 5 is almost tensioned and the tension element 6 is tensioned in this module 22'' . In Figs. 3 to 4, the festoon section 1 is in its completely retracted state, i.e. all modules 22, 22', 22'' are in their retracted states.

For transferring the festoon section 1 from the completely retracted state to the partially retracted state shown in Figs. 1 to 2, the front trolley 2 drives along the rail 26, while the drive element 15 of the drive cable trolley 16 between the front module 22'' and the intermediate module 22' breaks, until the tension element 6 is tensioned in the front module 22" and consequently the front module 22'' is in its extended state.

In particular, Figs. 1a to 3d show an intermediate one of the series of festoon sections 1. I.e., the shown festoon section 1 will be followed by at least one other festoon section 1 and will be preceded by at least one other festoon section 1. There is provided for a connector arrangement 8 adapted to be moveably mounted on the rail 6 and adapted to be arranged between two adjacent ones of the series of festoon sections 1, wherein the connector arrangement 8 comprises a front coupling element 9 and a rear coupling element (not visible, since only shown coupled to a front trolley coupling element mentioned below) for detachable coupling with the two adjacent ones of the series of festoon sections 1, in particular for coupling with a rear trolley coupling element 7 of a rear one 3a of the number of cable trolleys 3 of a preceding one of the series of festoon sections 1 and with a front trolley coupling element (not visible) of a front trolley 2 of a subsequent one of the series of festoon sections 1. In this embodiment, the connector arrangement 8 is integrated or coupled with the front trolley 2, i.e. they are in particular rigidly connected and cannot be detached non-destructively. The festoon sections 1, in particular a rear one 3a of the number of cable trolleys 3, further comprises a rear coupling element 7.

The rear trolley coupling elements 7 of the festoon sections 1 (of which one is shown) are configured for detachable coupling with the front coupling elements 9 of the connector arrangement 8. I.e., The front coupling elements 9 are configured as male coupling elements and the rear trolley coupling elements 7 are configured as matching female coupling elements. In Figs. 1a to 3d, also a subsequent connector arrangement 8' and the front trolley 2' of another (adjacent and succeeding) festoon section 1 are shown. The front coupling element 9' on the succeeding connector arrangement 8'is coupled to the rear trolley coupling element 7 of the festoon section 1 shown as a whole.

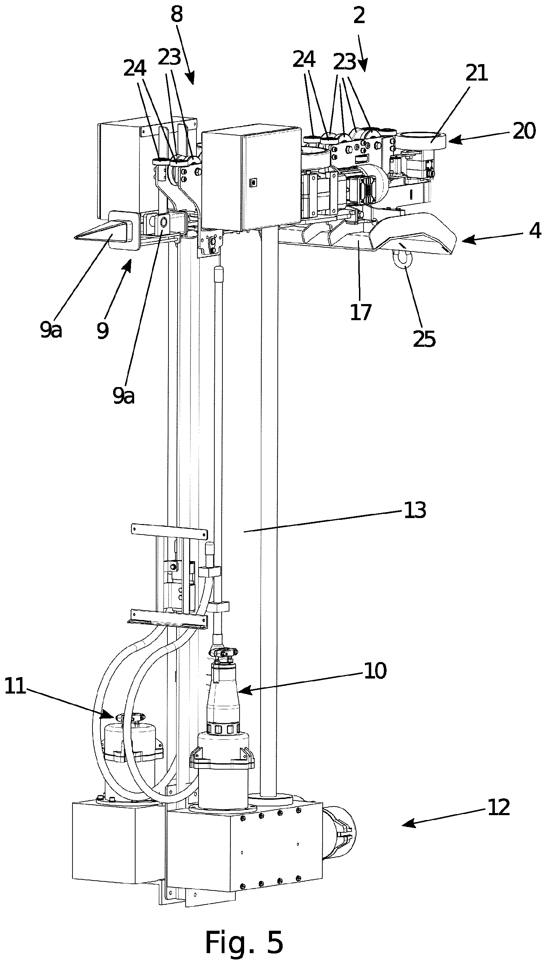

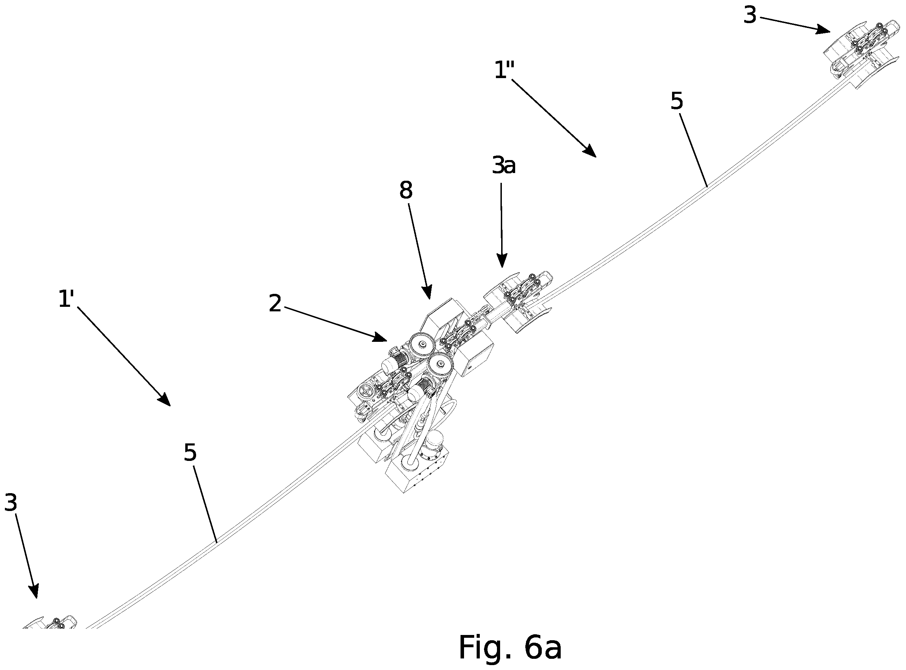

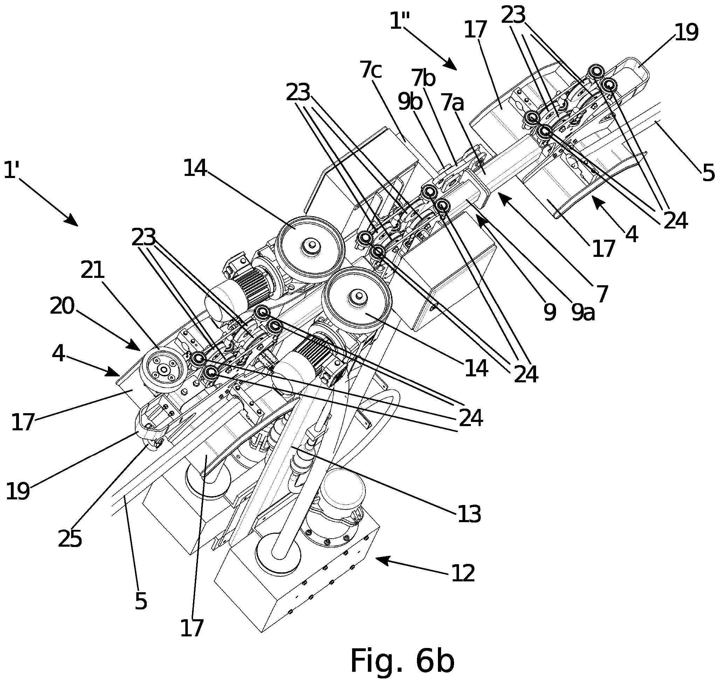

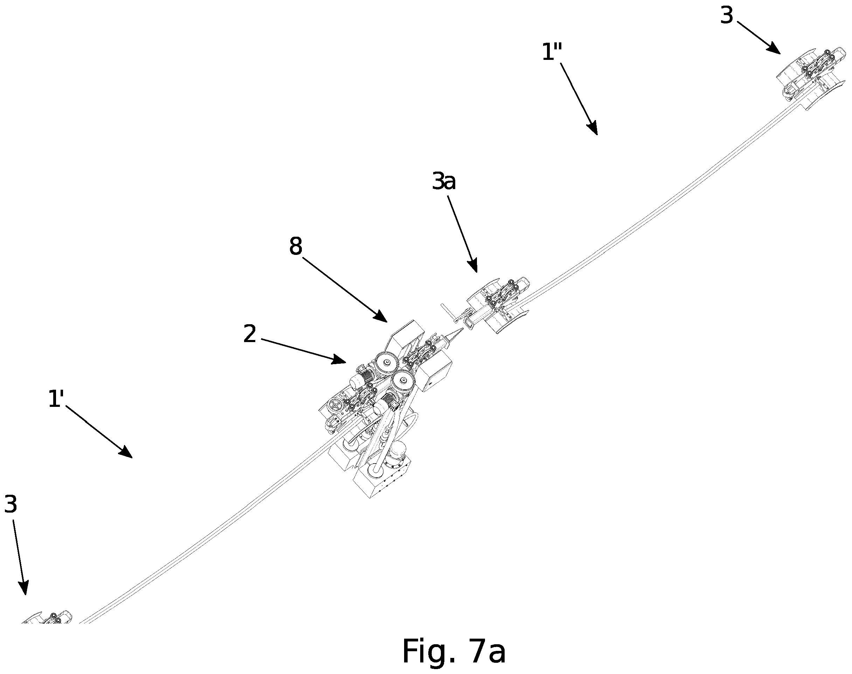

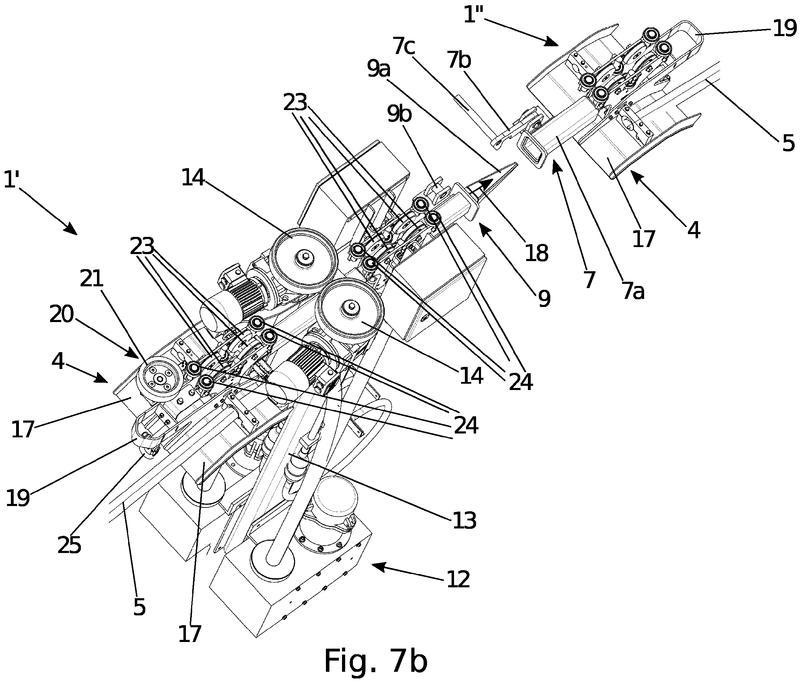

Fig. 5 schematically shows a connector arrangement 8 and a front trolley 2 of the embodiment of the festoon section 1 of Figs. 1a to 3d in more detail. Fig. 6a schematically illustrates the connection area between two adjacent festoon sections 1 and a connector arrangement 8 in-between in a connected state; Fig. 6b is a detailed view of Fig. 6a. Fig. 7a schematically illustrates the connection area between two adjacent festoon sections 1 in a disconnected state; Fig. 7b is a detailed view of Fig. 7a. In particular, Figs. 6a to 7b show the connector arrangement 8, the front trolley 2 of a succeeding festoon section 1' and the rear cable trolley 3a of a preceding festoon section 1". Figs. 6a and 7a further show one cable trolley 3 of the festoon sections 1', 1" adjacent to the front trolley 2 of festoon section 1' and to the rear cable trolley 3a of festoon section 1", respectively.

The connector arrangement 8 comprises the front coupling element 9. The front coupling element 9 comprises an alignment element 9a and a locking element 9b. The rear cable trolley 3a comprises the rear trolley coupling element 7. The rear trolley coupling element 7 equally comprises an alignment element 7a and a locking element 7b, which are configured for cooperating with the alignment element 9a and the locking element 9b of the front coupling element 9. For example by moving the front trolley 2 together with the connector arrangement 8 in the direction 18 along the rail 26 and breaking with the rear cable trolley 3a, the coupling elements 7, 9 can be moved to each other. The alignment elements 7a, 9a ensure that the locking elements 7b, 9b are properly aligned. Upon moving the front trolley 2 together with the connector arrangement 8 further towards the rear cable trolley 3, the locking element 7b of the rear cable trolley 3a snaps in with the locking element 9b of the front trolley 2 and, in this embodiment, is held in the locked state gravitationally. The rear trolley coupling element 7, in particular the locking element 7b, further comprises a lever 7c for lifting the locking element 7b in order to release the connection between the front locking element 9 and the rear trolley locking element 7 and consequently disconnect the festoon 1" from the connector arrangement 8, and in this way also from the festoon section 1' in this embodiment. The lever can be lifted by operating personnel, e.g. using a rod.

The connector arrangement 8 comprises a connection module 12 and a supporting bar 13 for holding the connection module 12 at a lowered height with respect to the rail 26. I.e., the supporting bar 13 extends from the trolley unit of the connector arrangement 8 substantially parallel to the vertical, away from the rail 26. In this way, the connection module can be held in a height that is easily accessible by operating personnel. The connection module comprises a first cable connector 10 for connection with the cable 5 supported by the cable trolleys 3 of the respective festoon section 1' and a second cable connector 11 for connection with a cable 5 supported by the adjacent festoon section 1". In this embodiment, the cable connectors 10, 11 are for connection of a hydraulic cable. The connection module then connects the cables connected to the cable connectors 10, 11. When the festoon sections 1', 1'' should be disconnected, at least the cable 5 of festoon section 1" is disconnected from the second cable connector 11. Upon reconnection of the festoon sections 1', 1", the cable 5 of the festoon section 1" is also reconnected to the second cable connector 11.

Each of the connector arrangement 8 and the front trolley 2 comprise two pairs of wheels 23 that run on the lower flange of the rail 26 and two pairs of guide rollers 24 that straddle the web of the rail 26 for alignment. In this embodiment, the front trolley 2 and the connector arrangement 8 are integrated with each other. The front trolley 2 comprises a pair of drive elements 14 for driving along the rail 26, wherein each one in particular comprises a friction wheel drive element.

The front trolley 2 comprises a device for determining a distance travelled by the front trolley 2. For this purpose, the front trolley 2 comprises a device 20 for measuring degrees of rotation, in particular a resolver, for determining a distance travelled by the respective front trolley 2 along the rail 26, wherein a wheel 21 of the device 20 for measuring degrees of rotation is arranged such that the wheel 21 contacts the rail 26 when the respective front trolley 2 is mounted on the rail 26. Further, for calibrating the distance determination by the device 20 for measuring degrees of rotation, the front trolley 2 comprises two proximity sensors arranged displaced from each other in a direction parallel to the rail 26 and directed at the rail 26 for detecting protrusions of the rail 26 as the respective front trolley 2 travels along the rail 26. The protrusions indicate an end of a rail section (or a junction between two rail sections), thus allowing to calibrate the device 20, since the length of a rail section is known. The front trolley 2 also comprises a load pin for determining a force on the front trolley 2 exerted by the tension element 6.

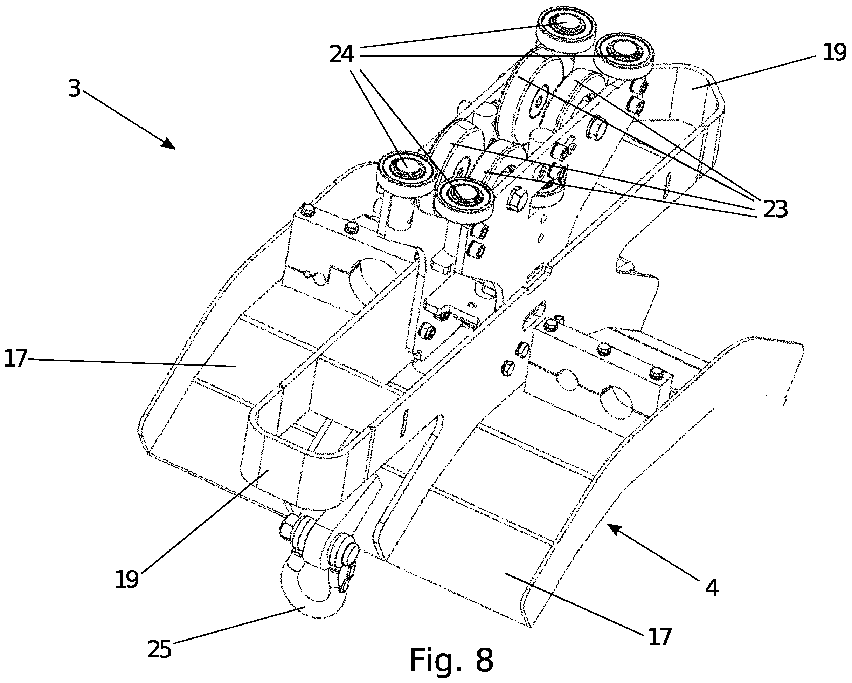

Fig. 8 schematically shows a cable trolley 2 of the embodiment of Fig. 1 in an oblique view. As can be seen in Figs. 1 to 4, all cable trolleys 3 apart from the drive cable trolleys 16 and the rear cable trolley 3a are identical. Similar to the front trolley, each cable trolley 3 comprises two pairs of wheels 23 that run on the lower flange of the rail 26 and two pairs of guide rollers 24 that straddle the web of the rail 26 for alignment.

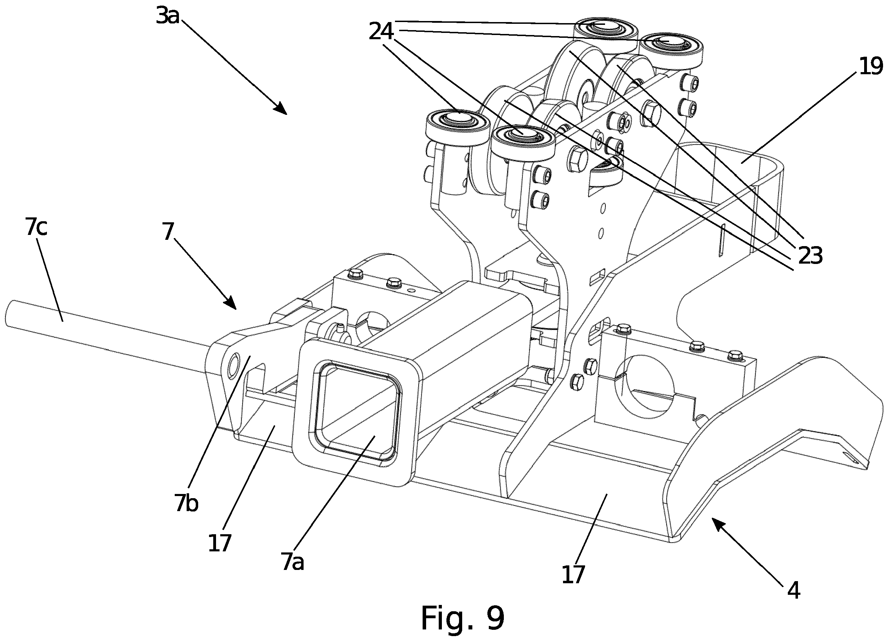

Fig. 9 schematically shows the rear cable trolley 3a of the embodiment of Fig. 1 in an oblique view. The rear cable trolley 3a differs from the cable trolleys 3 mostly in that it additionally includes the rear coupling element 7 as already described above.

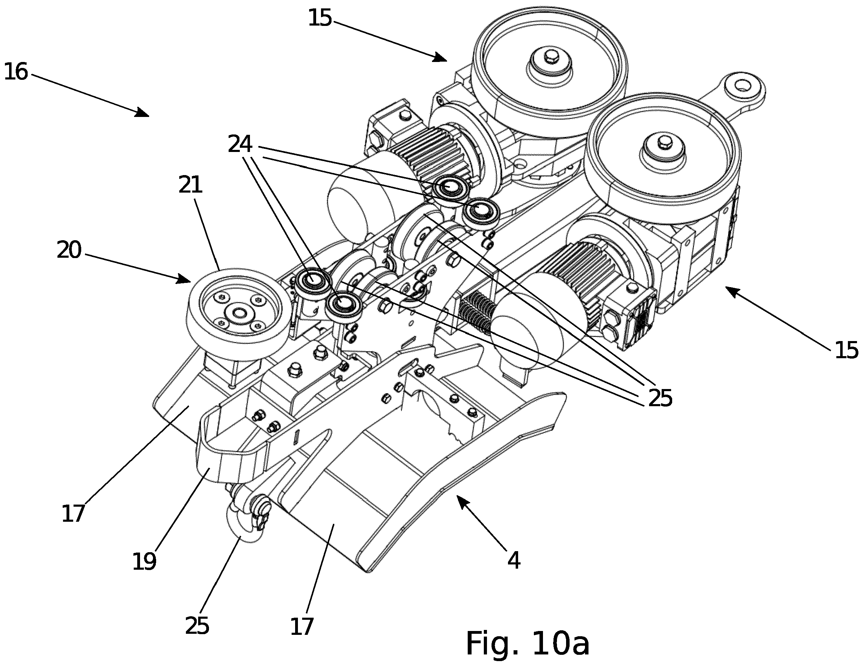

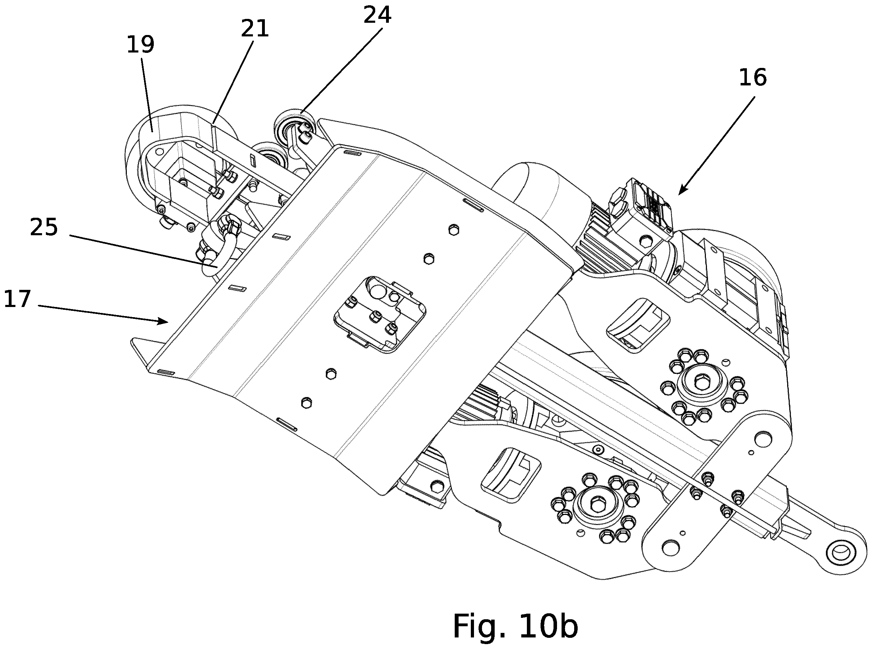

Fig. 10 schematically shows the drive cable trolley 16 of the embodiment of Fig. 1 in an oblique view from the top; Fig. 10b schematically shows the same drive cable trolley in an oblique view from the bottom. The drive cable trolley 16 differs from the cable trolleys 3 mostly in that it additionally comprises a pair of drive elements 15 for driving along the rail 26, as already described above. Each drive cable trolley 16 further comprises a device 20 for measuring degrees of rotation, in particular a resolver, for determining a distance travelled by the respective drive cable trolley 16 along the rail 26, wherein a wheel 21 of the device 20 for measuring degrees of rotation is arranged such that the wheel 21 contacts the rail 26 when the drive cable trolley 16 is mounted on the rail 26.

The saddles 4 of the cable trolleys 3 and the front trolley 2 each comprise two guide channels 17 for guiding the cable 5, wherein the guide channels 17 may extend in an angle to a moving direction 18 in which the respective cable trolley 3 moves along the rail 26. This allows loops of the cable 5 supported by adjacent trolleys to be overlapping. Instead of a single cable 5, more than one cable 5 may be provided, e.g. two power cables and two communication cables.

Further, the front trolley 2 and the number of cable trolleys 3 of each one of the series of festoon sections 1 comprise distance holders 19 which are configured for keeping adjacent ones of the front trolley 2 and the number of cable trolleys 3 of the respective one of the series of festoon sections 1 apart by a minimum distance.

The festoon section 1 further comprises a control unit which is configured for controlling the drive element 14 of the front trolley 2 and the drive element 15 of the drive cable trolleys 16. In particular, the control unit is configured for controlling the drive element 14 of the front trolley 2 and the drive element 15 of the drive cable trolleys 16 based upon readings from the device 20 for measuring degrees of rotation of the front trolley 2 or the drive cable trolleys 16, the two proximity sensors of the front trolley 2 and the load pin of the front trolley. E.g., if the force determined by the load pin exceeds a predefined threshold, the front trolley 2 may be given the signal to drive forward.

While Figs. 1a to 3d show a single festoon section 1, the festoon system 1 comprises a series of festoon sections 1, which may comprise the elements mentioned in the context of the festoon section 1 shown in Figs. 1a to 3d or may even be identical to the festoon section 1 shown in Figs. 1a to 3d, and a connector arrangement 8 between each two adjacent festoon sections 1. Preferably, a front one and a rear one in the series of festoon sections 1 are configured slightly differently, while intermediate festoon sections (between the front and the rear festoon section) are configured identical. Preferably, the rear cable trolley 3a of the rear festoon section 1 comprises an anchor element for fixing the rear cable trolley 3a to a fixpoint and may also comprise a drive element for relocation. Optionally, at an end of the festoon sections 1 there is provided for an end connector arrangement 8, which comprises a front coupling element or a rear coupling element for detachable coupling with an end festoon section.

Thus, the festoon system is modular. The festoon sections 1 can be moved individually, since each festoon section 1 comprises trolleys 2, 16 with drive elements 14, 15. Advantageously, the festoon sections 1 can determine their locations and thus can be adequately relocated. Each individual festoon section 1 can be shunt as a smaller unit in the mine to the next location where it is required. The number of festoon sections 1 can be adapted to the length required and festoon sections 1 not required at a certain time can be sidelined.

## Claims

1. Festoon system for mounting cables (5) on a rail (26) in a festoon-fashion, comprising:
a series of festoon sections (1), wherein each one of the series of festoon sections (1) comprises:
a front trolley (2) for driving along the rail (26), adapted to be moveably mounted on the rail (26),
a number of cable trolleys (3) adapted to be moveably mounted on the rail (26), wherein each of the number of cable trolleys (3) comprises a saddle (4) for supporting a cable (5),
a tension element (6) which connects the front trolley (2) and the number of cable trolleys (3) of the respective one of the series of festoon sections (1).

2. Festoon system according to claim 1, comprising
a connector arrangement (8) adapted to be moveably mounted on the rail (6) and adapted to be arranged between two adjacent ones of the series of festoon sections (1), wherein the connector arrangement (8) comprises a front coupling element (9) and a rear coupling element for detachable coupling with the two adjacent ones of the series of festoon sections (1), in particular for coupling with a rear trolley coupling element (7) of a rear one (3a) of the number of cable trolleys (3) of a preceding one of the series of festoon sections (1) and with a front trolley coupling element of a front trolley (2) of a subsequent one of the series of festoon sections (1),
wherein optionally, at an end of the festoon sections there is provided for an end connector arrangement (8), which comprises a front coupling element or a rear coupling element for detachable coupling with an end festoon section.

3. Festoon system according to claim 2, wherein each connector arrangement (8) comprises a first cable connector 10 for connection with a cable (5) supported by the cable trolleys (3) of a preceding one of the series of festoon sections (1) and a second cable connector (11) for connection with a cable (5) supported by a subsequent one of the series of festoon sections (1).

4. Festoon system according to claim 3, wherein the connector arrangement (8) comprises a connection module (12) and a supporting bar (13) for holding the connection module (12) at a lowered height with respect to the rail (26), wherein the connection module (12) comprises the first cable connector (10) and the second cable connector (11).

5. Festoon system according to any one of claims 2 to 4, wherein the connector arrangement (8) is integrated with the front trolley (2) of the subsequent one of the series of festoon sections (1).

6. Festoon system according to any one of the previous claims, wherein the front trolley (2) of each one of the series of festoon sections (1) comprises a drive element (14) for driving the front trolley (2) along the rail (26), wherein the drive element (14) in particular comprises a friction wheel drive element.

7. Festoon system according to any one of the previous claims, wherein at least one (16) of the number of cable trolleys (3) of each one of the series of festoon sections (1) comprises a drive element (15) for driving the respective one of the at least one (16) of the number of cable trolleys (3) along the rail (26).

8. Festoon system according to claim 6 or 7, wherein each one of the series of festoon sections (1) comprises a control unit which is configured for controlling the drive element (14) of the front trolley (2) of the respective one of the series of festoon sections (1) and/or the drive element (15) of the at least one (16) of the number of cable trolleys (3) of the respective one of the series of festoon sections (1).

9. Festoon system according to any one of the previous claims, wherein the saddle of the front trolley of each one of the series of festoon sections and/or the saddle (4) of at least one of the number of cable trolleys (3) of each one of the series of festoon sections (1) comprises a guide channel (17) for guiding the cable (5), wherein the guide channel (17) extends in an angle relative to a moving direction (18) in which the respective cable trolley (3) moves along the rail (26).

10. Festoon system according to any one of the previous claims, wherein the tension element (6) of each one of the series of festoon sections (1) comprises tension units, in particular tension ropes and/or tension chains and/or tension strings and/or tension straps, connecting adjacent ones of the front trolley (2) and the number of cable trolleys (3) of the respective one of the series of festoon sections (1).

11. Festoon system according to any one of the previous claims, wherein the front trolley (2) of each one of the series of festoon sections (1) comprises a force measurement means preferably a load pin for determining a force on the front trolley (2) exerted by the tension element (6), in particular the respective tension unit.

12. Festoon system according to any one of the previous claims, wherein the front trolley (2) and the number of cable trolleys (3) of each one of the series of festoon sections (1) comprise distance holders (19) which are configured for keeping adjacent ones of the front trolley (2) and the number of cable trolleys (3) of the respective one of the series of festoon sections (1) apart by a minimum distance.

13. Festoon system according to any one of the previous claims, wherein the front trolley (2) of each one of the series of festoon sections (1) comprises a device (20) for measuring degrees of rotation of the front trolley, in particular a resolver, for determining a distance travelled by the respective front trolley (2) along the rail (26), wherein a wheel (21) of the device (20) for measuring degrees of rotation is arranged such that the wheel (21) contacts the rail (26).

14. Festoon system section according to any one of the previous claims, wherein the front trolley (2) of each one of the series of festoon sections (1) comprises at least one sensor for detecting protrusions of the rail as the respective front trolley (2) travels along the rail, preferably two proximity sensors arranged displaced from each other in a direction parallel to the rail (26) and directed at the rail (26) for detecting protrusions of the rail (26) as the respective front trolley (2) travels along the rail (26).

15. Festoon system according to claim 8 and according to one of claims 13 or 14, wherein the control unit of each one of the series of festoon sections (1) is configured for controlling the drive element (14) of the front trolley (2) of the respective one of the series of festoon sections (1) and/or the drive element (15) of the at least one (16) of the number of cable trolleys (3) of the respective one of the series of festoon sections (1) based upon readings from the device (20) for measuring degrees of rotation of the respective one of the series of festoon sections (1) and/or readings from the two proximity sensors of the respective one of the series of festoon sections (1).

16. Festoon system according to any one of the previous claims, wherein each one of the series of festoon sections (1) comprises the cable (5), wherein the cable (5) is supported by each of the number of cable trolleys (3) of the respective one of the series of festoon sections (1).

17. Festoon system according to any one of the previous claims, comprising the rail (26), wherein the front trolley (2) and each of the number of cable trolleys (3) of each one of the series of festoon sections (1) are mounted on the rail (26).
